**Europäisches Patentamt**

**European Patent Office**

**Office européen des brevets**

(11) Veröffentlichungsnummer: **0 361 543 B1**

(12) **EUROPÄISCHE PATENTSCHRIFT**

(45) Veröffentlichungstag der Patentschrift:
16.10.91 Patentblatt 91/42

(21) Anmeldenummer: 89121450.4

(22) Anmeldetag: 05.06.87

(51) Int. Cl.⁵: **C04B 20/02, C04B 14/02**

(54) **Verfahren zum Einfärben von Beton.**

(30) Priorität: 09.06.86 DE 3619363

(43) Veröffentlichungstag der Anmeldung:
04.04.90 Patentblatt 90/14

(45) Bekanntmachung des Hinweises auf die
Patenterteilung:
16.10.91 Patentblatt 91/42

(84) Benannte Vertragsstaaten:
AT BE CH FR GB IT LI LU NL SE

(56) Entgegenhaltungen:
EP-A- 191 278
DE-A- 3 132 303
FR-A- 1 105 534
FR-A- 2 450 273
GB-A- 1 537 663
US-A- 2 221 175
US-A- 4 102 967
US-E- 20 776

(56) Entgegenhaltungen:
WORLD SURFACE COATINGS ABSTRACTS,
Band 53, Nr. 462, Dezember 1980, Seite 1566,
Zusammenfassung Nr. 80/8820, Old Woking,
Surrey GB; Z. KREIDL: "Preparing granular
pigments", & CS-A-179 453 (PAINT RESIN
PAT.)

(60) Veröffentlichungsnummer der früheren
Anmeldung nach Art. 76 EPü: 0 268 645

(73) Patentinhaber: CHEMISCHE WERKE
BROCKHUES AG
Mühlstrasse 118
W-6227 Walluf (DE)

(72) Erfinder: Jungk, Axel Ekkehard, Dr.
Kranichstrasse 22 Wohnpark im Teich
W-6085 Nauheim (DE)

(74) Vertreter: Kuhnen, Wacker & Partner
Schneggstrasse 3-5 Postfach 1553
W-8050 Freising (DE)

## Beschreibung

Die Erfindung betrifft ein Verfahren zum Einfärben von Beton.

Beton im Sinne dieser Erfindung ist der zementhaltige Werkstoff zur Herstellung von Betonsteinen und Betonplatten, Betondachsteinen, Verbundsteinen, aber auch Faserzement- und/oder Zementmörtel.

Beton ist ein bewährter konstruktiver Baustoff, der in Form von Sichtbeton auch ästhetische Zwecke erfüllt. Die Einfärbung der Betonmasse zur Herstellung von Sichtbeton verleiht diesem eine praktisch wartungsfreie Farbigkeit für viele Jahre.

Dagegen müssen Betonflächen, die durch Anstriche dekoriert wurden, in kurzen Zeitabständen erneuert werden. Eingefärbter Beton wird z.B. in Fassaden, Platten, Pflastersteinen, Dachsteinen, Lärmwällen, Uferbefestigungen, Brücken und ähnlichen Konstruktionen, aber beispielsweise auch zur Dekoration von Fassaden in Form von eingefärbtem Mörtel verwendet.

Beton wird mittels anorganischer und neuerdings organischer Pigmente eingefärbt. Solche für Beton geeigneten Pigmente, die sich seit langer Zeit bewährt haben, sind z.B. Manganoxid, Eisenoxide und Kohlenstoff. Von diesen haben sich insbesondere Pigmente auf Basis von Kohlenstoff bzw. Eisenoxid in der Praxis gut bewährt.

Die Herstellung des eingefärbten Betons ist jedoch problematisch. Das Pigmentpulver staubt und sein Einsatz verursacht die Verunreinigung von Menschen, Maschinen und Betrieben.

Weiterhin besitzen Pigmente den Nachteil, daß sie wegen ihrer Feinteiligkeit bei der Lagerung — insbesondere bei Zutritt von etwas Feuchtigkeit — zur Brückenbildung neigen. Daher sind in Silos gelagerte Pigmentpulver schon nach kurzer Zeit nicht mehr frei fließend. Sie lassen sich daher nur mit Mühe unter erheblichem apparativem und menschlichem Aufwand aus Silos wieder austragen. Deswegen bereitet auch ihre Dosierung über Schnecken bzw. Vibrationsrinnen erhebliche Schwierigkeiten.

Im Stand der Technik wurden die bei Pigmentpulvern auftretenden Probleme des Staubens, der Lagerung im Silo (Silierung) und der automatischen Dosierung durch die Verwendung der Pigmente in Form wässriger Pigmentpasten im Betonbereich zu lösen versucht. Solche Pasten enthalten meist etwa 70-30% Wasser als Trägermedium sowie oberflächenaktive Stoffe. Die Vorteile, die solche wässrige Pigmentpasten gegenüber trockenen Pigmentpulvern aufweisen, werden jedoch mit erheblichen Nachteilen erkauft :

In der Praxis lassen sich die Pasten nicht in Silos bzw. anderen Großraumbehältern längere Zeit lagern, weil diese sich hierbei durch Absetzen entmischen und auch teilweise feste Ablagerungen bilden.

Wegen des hohen Wassergehaltes verdoppeln sich die Verpakkungskosten für die wässrigen Pigmentpasten ebenso wie die Transportkosten. Ein bedeutender Nachteil besteht auch darin, daß solche Pasten überhaupt nicht einsetzbar sind, wenn die Eigenfeuchte von Sand und Aggregaten bei der Betonzubereitung schon so hoch ist, daß zusätzliche Zugaben von Wasser—auch in Form von wässrigen Pigmentpasten—die Betonkonsistenz in einem untragbaren Maße verschlechtern. In den Bereichen Lack- und Kunststoffeinfärbung können die letztgenannten Nachteile grundsätzlich dadurch vermieden werden, daß man das Pigment nicht in Form von Pasten oder Pulvern, sondern in Form von Granulaten einsetzt. Insbesondere bei gesundheitsschädlichen Pigmenten werden Pigmentgranulate seit vielen Jahren in der Kunststoffindustrie eingesetzt.

Die FR-A-2,450,273 beschreibt kohlenstoffpigment-haltige, trockene, staubfreie Perlgranulate zum Einfärben von Zement mit einem Wassergehalt von 59%. Diese bekannten Rußgranulate werden nicht durch Sprühtrocknung hergestellt. Sie werden in Form einer wäßrigen Dispersion eingesetzt. Dieser FR-PS ist weder die Verwendung anderer Pigmente als Gasruß noch der Einsatz der Granulate zum Färben von Beton zu entnehmen. Die nachveröffentlichte EP-A-0191278 stellt Stand der Technik nach Art. 54 (3) (4) EPÜ dar. Sie beschreibt Farbpräparationen für die Massefärbung von Baustoffen, die aus einem schüttfähigen Feuchtgranulat bestehen, welches nicht durch Sprühtrocknung hergestellt worden ist.

Herstellung und Einsatz von Granulaten sind grundsätzlich in vielen Bereichen alte Tradition (vgl. H. Rumpf in "Chemie-Ing.-Technik, 30, 1958, Nr. 3, Nr. 4, Nr. 5" ; W.C. Peck in "Chemistry and Industry, Ausgabe vom 20.12.1958, Seiten 1674 ff" ; zum Schmelzgranulieren siehe U.A.W. Boretzky in "Fette-, Seifen-, Anstrichmittel, Nr. 4, 1967"). So haben sich Briketts im Kohle- und Erzbereich durchgesetzt ; Mikrokapseln werden im Durchschreibpapier verwendet ; im Agrarbereich findet sich das Futter in Form von Kompäktgranalien im Silo ; im Lacksektor lösen sich staubfreie Nitrozellulose-Pigmentkonzentrate in Lösungsmitteln einwandfrei auf ; im Kautschukbereich wird Ruß als Aufbaugranulat eingesetzt ; und PVC wird in Form von gesprühtem Perlgranulat verwendet.

Dagegen ist die Einfärbung von Betonen mit Pigmentgranulat noch nicht Stand der Technik, denn Pigmentgranulate gemäß Stand der Technik waren im Einfärbeprozeß nachteilig.

Die Scherkräfte im Beton während des Mischzyklus auf die Granulate sind zum Pigmentdispergieren zu gering. Dies bedeutet :

1. Die Pigmentgranulate bilden im Beton Stippen und Farbnester ; diese machen sich als optische Fehler auf der Betonoberfläche bemerkbar.

2. Die im Vergleich zu Pulverpigmenten wesentlich schlechtere Dispergierung der Pigmente während des Mischzyklus im Betonmischer führt zu einer mangelhaften Ausnutzung der Farbkraft des Granulates. Dementsprechend muß eine höhere Menge an Pigmentgranulaten als an Pigmentpulver eingesetzt werden, um einen identischen Farbton in der Betonmischung zu erzielen.

3. Die Verwendung von bindemittelhaltigem Pigmentgranulat bringt Fremdstoffe in den Beton ein, ohne die nachteiligen Dispergierschwierigkeiten zu verbessern.

4. Im Beton findet sich nicht genügend Feuchte und Zeit, um bindemittelhaltige Granulate aufzulösen.

Dieser Nachteile wegen werden z.Zt. auch sprühgetrocknete Betonpigmente wieder über eine Mahlung in ihre Pulver überführt, bevor sie zur Einfärbung von Beton zum Einsatz kommen.

Der Erfindung liegt daher die Aufgabe zugrunde, ein Verfahren zum Einfärben von Beton zur Verfügung zu stellen, wodurch die Nachteile aus der Anwendung von Farbpulvern von wässrigen Pigmentpasten oder von Pigmentgranulaten gemäß Stand der Technik vermieden werden.

Diese Aufgabe wird erfindungsgemäß dadurch gelöst, daß man als Färbemittel durch Sprühtrocknung hergestellte Pigmentgranulate einsetzt, die aus einem Kohlenstoffpigment und gegebenenfalls einem oder mehreren anderen Pigment(en) sowie einem oder mehreren die Dispergierung der Pigmente im Beton fördernden Bindemittel(n) und gegebenenfalls anderen Zusatzstoffen bestehen.

Bevorzugte Ausführungsformen der Erfindung werden in den Unteransprüchen 2 bis 5 genannt.

Diese Aufgabe wird weiterhin gelöst durch die Verwendung von durch Sprühtrocknung hergestellten Pigmentgranulaten, die aus einem Kohlenstoffpigment und gegebenenfalls einem oder mehreren anderen Pigment(en) sowie einem oder mehreren die Dispergierung der Pigmente im Beton fördernden Bindemittel(n) und gegebenenfalls anderen Zusatzstoffen bestehen, zum Einfärben von Beton. So eignen sich feinteilige Granulate aus Trocknungsprozessen der Mischungen aus Pigmenten, Bindemitteln, Flüssigkeit, vorzugsweise Wasser und ggf. anderen Stoffen.

Besonders geeignet sind Perlgranulate. Erstaunlicherweise wurde gefunden, daß sich obenerwähnte Granulate im Betonmischer gut auflösen. Daher sind sie im praktischen Gebrauch gut einsetzbar. Ferner verteilen sie sich homogen im Beton, so daß Sichtbeton ohne Stippen und Farbnester einwandfrei eingefärbt wird. Ihre Verwendung ist auch wirtschaftlich, da mit der gleichen Menge an im Granulat enthaltenem Pigment eine gleich tiefe Einfärbung erzielbar ist, wie die mit der entsprechenden Menge des Pigmentes in Pulverform.

Das erfindungsgemäß eingesetzte Granulat fließt frei aus einem Silo und läßt sich pneumatisch fördern. Es ist in der Handhabung praktisch staubfrei. Damit eignet sich das erfindungsgemäße Verfahren insbesondere zur automatischen, sauberen Einfärbung von Betonen.

Als Pigment wird Kohlenstoff verwendet. Ein bevorzugtes Pigment ist Ruß. Feingemahlene Kohle ist wegen ihrer geringen Farbkraft weniger bevorzugt. Auch werden Mischungen von Kohlenstoffpigmenten mit anderen Pigmenten, z.B. Mangan oder Eisen enthaltenden Pigmenten eingesetzt.

In dem erfindungsgemäß verwendeten Granulat, vorzugsweise Perlgranulat, wird das Pigment mit einem die Dispergierung des Pigmentes in Beton fördernden Bindemittel vermischt. Gegebenenfalls können zusätzlich andere Bindemittel, die in Beton nicht stören, eingesetzt werden. Zur Einfärbung sind in den Granulaten, vorzugsweise in den Perlgranulaten, die Kombinationen aus Pigment und z.B. den folgenden technisch verfügbaren, die Dispergierung der Pigmente in Beton fördernden Bindemitteln einsetzbar :

Alkylphenol, z.B. Igepal C[R] ;

ein Eiweißfettsäurekondensationsprodukt, z.B. Lamepon[R] ;

Alkylbenzolsulfonat, auch in Form seines Salzes, z.B. Marlon[R] ;

Alkylnaphtalinsulfonat, z.B. Necal BXR[R] ;

Ligninsulfonat, z.B. Sulfitablauge, z.B. Waldhoflauge[R] ;

Sulfatierter Polyglycolether, z.B. ein solcher von Fettalkoholen oder Alkylphenolen oder sein Salz ;

ein Melaminformaldehydkondensat, ein Naphthalinformaldehydkondensat, Gluconsäure, andere betonunschädliche Polyhydroxiverbindungen, Salze von niedrig molekularen teilveresterten Styrolmaleinsäureanhydrid-Copolymerisaten und von Copoolymeren aus Vinylacetat und Krotonsäure. Als Bindemittel besonders bevorzugt ist Ligninsulfonat, z.B. Ammoniumligninsulfonat.

Die geeignete Granulatform für das erfindungsgemäße Verfahren ist das Perlgranulat. Dieses wird über Sprühtrockner durch Einstoff- oder Mehrstoffdüsen bzw. Zerstäuberscheiben in einem Sprühturm aus Gemischen von Pigment, Bindemittel und Flüssigkeit, vorzugsweise Wasser und gegebenenfalls anderen Zusatzstoffen hergestellt. Die Perlgranulate fallen in Form von Mikrogranulaten an, wobei 90% der Pigmentteilchen eine Größe von 20 bis 500 μm, insbesondere eine Größe von 50 bis 300 μm besitzen.

Die Menge an eingesetztem Bindemittel, das die Dispergierung des Pigmentes im Beton fördert, beträgt 0,1 bis 15 Gew.-%, bezogen auf das Granulat, vorzugsweise 1 bis 8 Gew.-%, insbesondere 2 bis 6 Gew.-%.

Die Erfindung wird im folgenden anhand der Beispiele näher erläutert.

3

## Beispiel 1

Herstellung eines Kohlenstoff enthaltenden Perlgranulates

Eine wässrige Suspension, die 33 Gew.-% Kohlenstoffpigment und 1,5 Gew.-% Ammoniumligninsulfonat als Bindemittel (Am 250 Hansa der Lignin-Chemie Waldhof-Holmen GmbH) enthielt, wurde auf einer Sprühtrocknungsanlage mit Druckdüsenzerstäubung im Gegen-/Gleichstrom sprühgetrocknet. Es betrugen die Zerstäubungsdrücke bei der Druckdüsenzerstäubung 10 bis 16 bar, die Trocknungslufteintrittstemperatur 320 bis 400°C und die Ablufttemperatur 125 bis 150°C.

Es wurden grobe, rieselfähige und staubarme Perlgranulate mit einer Restfeuchte von 1,2 bis 4,2% und einem Schüttgewicht von 370 bis 400 g/l erhalten. Die Perlgranulate hatten eine mittlere Korngröße von 150 bis 200 µm und besaßen gute mechanische Stabilität.

## Beispiel 2

Herstellung eines Perlgranulates aus einer Eisenoxid und Kohlenstoff enthaltenden Pigmentdispersion

Aus einer wässrigen Suspension (slurry) aus

| | |
|---|---|
| 1,3 | Teilen Ammonligninsulfonat |
| 4,7 | Teilen Kohlenstoffpigment |
| 22 | Teilen Eisenoxidgelb |
| 22 | Teilen Eisenoxidrot und |
| 50 | Teilen Wasser |

werden auf dieselbe Weise wie im Beispiel 1, Perlgranulat hergestellt. Der Zerstäubungsdruck beträgt 11 bis 16 bar, die Trocknungslufteintrittstemperatur beträgt 280 bis 300°C, die Ablufttemperatur ist 90 bis 110°C.

Das erhaltene Perlgranulat ist grob, rieselfähig und staubfrei. Die Restfeuchte ist 2 bis 2,2%. Das Schüttgewicht liegt bei 600 bis 650 g/l.

## Beispiel 3

In einem Betonmischer (Bauart Schlosser) mit 1 m³ Inhalt werden 1.560 kg Sand und erfindungsgemäß 7 kg Ruß in Form seines Perlgranulates aus Beispiel 1 15 min lang gemischt ; danach werden 440 kg Portlandzement hinzugegeben und 15 min lang mit der vorliegenden Mischung homogenisiert ; dann wird der Mischer entleert. Die Mischung wird zum Herstellen von Betondachsteinen eingesetzt.

## Vergleichsbeispiel 1

Es wird verfahren wie in Beispiel 2. Zur Einfärbung werden jetzt 7 kg Kohlenstoffpigment in Pulverform eingesetzt. Die feuchten Betone und die 24 h lang ausgehärteten Dachsteine werden miteinander verglichen.

## Beispiel 4

Es wird verfahren wie in Beispiel 3. Zur Einfärbung werden jetzt 20 kg des braunen Perlgranulates aus Beispiel 2 eingesetzt.

## Vergleichsbeispiel 2

Es wird verfahren wie in Beispiel 3. Zur Einfärbung werden jetzt 20 kg des Pulvergemisches aus den Einzelkomponenten der Pigmente wie in Beispiel 2 eingesetzt.

## Vergleichsbeispiel 3

Es wird verfahren wie in Beispiel 3. Zur Einfärbung werden jetzt 40 kg der Pigmentsuspension eingesetzt, die in Beispiel 2 sprühgranuliert wurde.

Außerdem wurde die der Betonmischung zugegebene Wassermenge von 100 kg auf 80 kg vermindert, um dem Wasser in der zugesetzten Pigmentsuspension Rechnung zu tragen.

EP 0 361 543 B1

Ergebnis von Beispiel 4 und Vergleichsbeispielen 2 und 3

Die feuchten Betone sowie die 24 h lang ausgehärteten Dachsteine aus Beispiel 4 und den Vergleichsbeispielen 2 und 3, wurden farblich miteinander verglichen. Der erfindungsgemäß eingefärbte Beton und der Beton aus Vergleichsbeispiel 3 zeigten keine Unterschiede. Der Beton aus Vergleichsbeispiel 2 war deutlich inhomogener eingefärbt.

Beispiel 5

In einem 1 m³ Betonmischer (Bauart Drais) werden mit 975 kg Sand und 580 kg Kies erfindungsgemäß 3,3 kg Ruß in Form seines Perlgranulates aus Beispiel 1 10 sec lang vermischt ; danach werden 200 kg Portlandzement in die Mischung gegeben und 15 sec lang homogenisiert ; es werden dann 100 l Wasser unter weiterem Homogenisieren zudosiert. Nach einer Gesamtmischzeit von 60 sec wird der Mischer entleert. Die Betonmischung wird zur Herstellung von Betonverbundpflaster eingesetzt.

Vergleichsbeispiel 4

Es wird verfahren wie in Beispiel 5. Statt des erfindungsgemäßen Perlgranulates werden als Färbemittel gemäß Stand der Technik 3,3 kg des Kohlenstoffpigmentes aus Beispiel 1 in Form seines Pulvers eingesetzt.

Ergebnis von Beispiel 5 und Vergleichsbeispiel 4

Die feuchten Betone und die daraus hergestellten Verbundsteine nach 28 d langer Aushärtzeit wurden miteinander verglichen. Farbliche Unterschiede wurden nicht festgestellt.

Beispiel 6

Es wurde verfahren wie in Beispiel 5. Erfindungsgemäß wurde unter Verwendung von 11 kg Perlgranulat aus Beispiel 2 eingefärbt.

Vergleichsbeispiel 5

Es wurde verfahren wie in Beispiel 5. Gemäß Stand der Technik wurde eingefärbt mit 22 kg Slurry, wie sie in Beispiel 2 zur herstellung von Perlgranulat eingesetzt wurde. Statt 100 kg Wasser wurde 89 kg eingesetzt, um dem Wassergehalt der Slurry im Beton Rechnung zu tragen.

Ergebnis von Beispiel 6 und Vergleichsbeispiel 5

Der Vergleich je der zwei feuchten Betonmischungen und der 28 d lang ausgehärteten Steine miteinander ließ Unterschiede in der Einfärbqualität nicht erkennen.

Beispiel 7

Die wässrige Kohlenstoffpigmentsuspension aus Beispiel 1 wurde perlgranuliert analog Beispiel 1, jedoch betrugen die Zerstäubungsdrücke 8 bis 10 bar, die Trocknungslufteintrittstemperatur betrug 480°C, die Ablufttemperatur bewegte sich zwischen 125 und 150°C. Erhalten wurden frei fließende, staubfreie Perlgranulate mit einer Restfeuchte von ca. 8% und einem Schüttgewicht von 370 g/l. Die mittlere Korngröße lag bei 250 µm, die mechanische Stabilität war gut.

Beispiel 8

In einem Laborbetonmischer, Bauart Hobart, mit 5 l Inhalt wurden 1,35 kg Normsand und 15 g Pigment 2 min vermischt. Anschließend wurden 0,500 kg Portlandzement und 0,200 l Wasser hinzugefügt und 4 min homogenisiert. Als Pigmente wurden eingesetzt :

5

| Pulverpigment/Flüssigpigment | Granulat |
|---|---|
| Kohlenstoffsuspension aus Beispiel 7 | Granulat Beispiel 7 |
| (Dosierung 300 %, bezogen auf Granulat) | |

Aus dem je so hergestellten farbigen Beton wurden Prismen produziert wie folgt :

Der fertige Mörtel wird anschließend in Stahlformen (40 × 40 × 160 mm) gegossen. Der Mörtel wird in den Stahlformen gleichmäßig verteilt. Überstehende Masse wird mit dem Spachtel abgezogen. Zur Verdichtung des Mörtels werden die Formen 1 min auf einer Rüttelmaschine gerüttelt. Nach 1 d werden die Prismen entschalt und zur Nachbehandlung 3 d in Plastikfolie gelagert.

Weitere Prismen wurden analog hergestellt, unter Verkürzung der zweiten Mischzeit um 2 bzw. 3,5 min.

Diese Prismen wurden danach farbmäßig verglichen. Der Vergleich bezieht sich auf Prismen, die mit Pulverpigment bzw. dem dazugehörigen Granulat eingefärbt worden waren.

Bei keinem der Versuchsprismen konnten signifikante Farbunterschiede — bezogen auf die Betoneinfärbung gemäß Stand der Technik bzw. die erfindungsgemäße Betoneinfärbung mit Granulat — beobachtet werden, d.h., die Granulatpigmente entwickelten ihre Farbkraft genau so gut wie die dazugehörigen Pulverpigmente.

## Patentansprüche

1. Verfahren zum Einfärben von Beton, dadurch gekennzeichnet, daß man als Färbemittel durch Sprühtrocknung hergestellte Pigmentgranulate einsetzt, die aus einem Kohlenstoffpigment und gegebenenfalls einem oder mehreren anderen Pigment(en) sowie einem oder mehreren die Dispergierung der Pigmente im Beton fördernden Bindemittel(n) und gegebenenfalls anderen Zusatzstoffen bestehen.

2. Verfahren nach Anspruch 1, dadurch gekennzeichnet, daß das Kohlenstoffpigment Ruß ist.

3. Verfahren nach Anspruch 1 oder 2, dadurch gekennzeichnet, daß die Dispergierung der Pigmente im Beton förderndes Bindemittel ein Alkylbenzolsulfonat, Alkylnaphalinsulfonat, Ligninsulfonat, ein sulfatierter Polyglykoläther, Melaminformaldehydkondensat, Naphthalinformaldehydkondensat, Glukonsäure, eine andere betonunschädliche Polyhydroxyverbindung, ein Salz eines niedrigmolekularen teilveresterten Styrol-Maleinsäureanhydrid-Copolymerisats und/oder ein Copolymeres aus Vinylacetat und Krotonsäure ist.

4. Verfahren nach Anspruch 1, 2 oder 3, dadurch gekennzeichnet, daß das Bindemittel ein Ligninsulfonat ist.

5. Verfahren nach einem der Ansprüche 1 bis 4, dadurch gekennzeichnet, daß die Granulate durch Sprühgranulieren eines Gemisches aus Pigment, Bindemittel und Flüssigkeit, vorzugsweise Wasser und gegebenenfalls anderen Zusatzstoffen, hergestellt wurden.

6. Verwendung von durch Sprühtrocknung hergestellten Pigmentgranulaten, die aus einem Kohlenstoffpigment und gegebenenfalls einem oder mehreren anderen Pigment(en) sowie einem oder mehreren die Dispergierung der Pigmente im Beton fördernden Bindemittel(n) und gegebenenfalls anderen Zusatzstoffen bestehen, zum Einfärben von Beton.

## Claims

1. A process for the dyeing of concrete, characterised in that the dyeing agent used is pigment granulates produced by spray-drying and consisting of a carbon pigment and, if required, one or more other pigments and one or more binders which promote the dispersion of the pigments in the concrete, and, if required, other additives.

2. A process according to claim 1, characterised in that the carbon pigment is carbon black.

3. A process according to claim 1 or 2, characterised in that the binder promoting the dispersion of the pigments in the concrete is an alkylbenzene sulphonate, alkylnaphthalene sulphonate, lignin sulphonate, a sulphated polyglycol ether, melamine formaldehyde condensate, naphthalene formaldehyde condensate, gluconic acid, another polyhydroxy compound non-harmful to concrete, a salt of a low-molecular partially esterified styrene maleic acid anhydride copolymerisate and/or a copolymer of vinylacetate and crotonic acid.

4. A process according to claim 1, 2 or 3, characterised in that the binder is a lignin sulphonate.

5. A process according to any one of claims 1 to 4, characterised in that the granulates are prepared by spray-granulation of a mixture of pigment, binder and liquid, preferably water and, if required, other additives.

6. Use of pigment granulates produced by spray-drying and consisting of a carbon pigment and, if required, one or more other pigments and one or more binders which promote the dispersion of the pigments in the concrete, and, if required, other additives, for dyeing concrete.

## Revendications

1. Procédé de coloration du béton caractérisé en ce qu'on met en oeuvre, comme agent colorant, des granules de pigment qui sont fabriqués par séchage par pulvérisation et qui sont constitués d'un pigment à base de carbone et éventuellement d'un ou de plusieurs autres pigments ainsi que d'un ou de plusieurs liants favorisant la dispersion des pigments dans le béton et éventuellement d'autres additifs.

2. Procédé suivant la revendication 1, caractérisé en ce que le pigment à base de carbone est du noir de fumée.

3. Procédé suivant l'une des revendications 1 et 2, caractérisé en ce que le liant favorisant la dispersion des pigments dans le béton est un sulfonate d'alkylbenzène, un sulfonate d'alkylnaphtalène, un ligninesulfonate, un éther de polyglycol sulfaté, un produit de condensation de mélamine et de formaldéhyde, un produit de condensation de naphtalène et de formaldéhyde, de l'acide gluconique, un autre composé polyhydroxylé non dommageable pour le béton, un sel d'un copolymère de styrène et d'anhydride maléique partiellement estérifié à faible poids moléculaire et/ou un copolymère d'acétate de vinyle et d'acide crotonique.

4. Procédé suivant l'une des revendications 1, 2 et 3, caractérisé en ce que le liant est un ligninesulfonate.

5. Procédé suivant l'une des revendications 1 à 4, caractérisé en ce que les granules sont préparés par granulation par pulvérisation d'un mélange à base de pigment, de liant et de liquide, de préférence d'eau, et éventuellement d'autres additifs.

6. Utilisation de granules de pigment qui sont fabriqués par séchage par pulvérisation et qui sont constitués d'un pigment à base de carbone et éventuellement d'un ou de plusieurs autres pigments ainsi que d'un ou de plusieurs liants favorisant la dispersion des pigments dans le béton et éventuellement d'autres additifs, pour la coloration du béton.